Europäisches Patentamt

European Patent Office

Office européen des brevets

(11) Veröffentlichungsnummer: **0 386 273 B1**

(12) **EUROPÄISCHE PATENTSCHRIFT**

(45) Veröffentlichungstag der Patentschrift: **23.12.92**

(21) Anmeldenummer: **89103326.8**

(22) Anmeldetag: **24.02.89**

(51) Int. Cl.⁵: **B65G 69/28**

(54) **Vorrichtung zum Ausschwenken der Verlängerung von Überfahrbrücken für Rampen.**

(43) Veröffentlichungstag der Anmeldung:
**12.09.90 Patentblatt 90/37**

(45) Bekanntmachung des Hinweises auf die
Patenterteilung:
**23.12.92 Patentblatt 92/52**

(84) Benannte Vertragsstaaten:
**AT BE CH DE ES FR GB GR IT LI LU NL SE**

(56) Entgegenhaltungen:
**GB-A- 2 015 465**
**US-A- 3 327 335**
**US-A- 3 444 574**
**US-A- 3 454 974**

(73) Patentinhaber: **VAN WIJK NEDERLAND B.V.**
**Bouwweg 14**
**NL-8243 PJ Lelystad(NL)**

(72) Erfinder: **Das Dores, Antonio Pereira**
**Archipel 36-09**
**NL-8224 HL Lelystad(NL)**

(74) Vertreter: **Beil, Hans Chr., Dr.**
**Beil, Wolff und Beil, Rechtsanwälte Adelon-**
**strasse 58 Postfach 80 01 40**
**W-6230 Frankfurt am Main 80(DE)**

EP 0 386 273 B1

Anmerkung: Innerhalb von neun Monaten nach der Bekanntmachung des Hinweises auf die Erteilung des europäischen Patents kann jedermann beim Europäischen Patentamt gegen das erteilte europäische Patent Einspruch einlegen. Der Einspruch ist schriftlich einzureichen und zu begründen. Er gilt erst als eingelegt, wenn die Einspruchsgebühr entrichtet worden ist (Art. 99(1) Europäisches Patentübereinkommen).

## Beschreibung

Gegenstand der Erfindung ist eine Vorrichtung zum Ausschwenken der Verlängerung von mechanisch betätigten Überfahrbrücken für Rampen gemäß Oberbegriff des Anspruchs bei der die am rampenfernen Ende der Überfahrbrücke um eine waagerechte Achse drehbar gelagerte Verlängerung durch Belastung der Brücke in der obersten Betriebsstellung mittels eines Stangensystems ausgeklappt wird (siehe Z.B. US-A-3.327.335).

Überfahrbrücken für Rampen, über die Fahrzeuge be- und entladen werden, können am rampenfernen Ende der Überfahrbrücke Verlängerungen aufweisen, mittels derer die Verbindung zwischen der Überladebrücke und der zu beladenden Fahrzeugfläche hergestellt wird. In der Ruhestellung ist diese Verlängerung entweder in die Brückenplattform eingefahren oder senkrecht nach unten geklappt und kann bei dieser Lösung sogar zur Abstützung der Brücke im horizontalen Ruhezustand verwendet werden. Wird die Brücke motorisch oder hydraulisch betätigt, ist das Ausfahren oder Ausklappen der Verlängerung aus der Ruhestellung in die Arbeitsstellung kein Problem. Bei durch Federkraft oder von Hand bedienten Überfahrbrücken macht es erhebliche Schwierigkeiten, die Verlängerung in die Arbeitsstellung zu bringen. Es sind dafür zahlreiche Lösungen bekannt, die jedoch alle wenig befriedigen und in ihrem mechanischen Aufbau teilweise sehr kompliziert sind.

Ziel der Erfindung war es, eine Vorrichtung zum Ausschwenken der Verlängerung solcher Überfahrbrücken zu schaffen, die einerseits einfach aufgebaut und andererseits ohne große Schwierigkeiten, insbesondere ohne große Kraftanstrengung betätigt werden kann.

Diese Aufgabe wird erfindungsgemäß durch die kennzeichnenden Merkmale des Anspruchs gelöst.

Anhand der Zeichnungen wird die Erfindung näher erläutert. Dabei zeigt

Figur 1
einen Längsschnitt durch den vorderen Teil einer Überfahrbrücke mit der erfindungsgemäßen Ausklappvorrichtung im Ruhezustand,
Figur 2
einen Längsschnitt des gleichen Teils nach Anheben der Brücke in die oberste Arbeitsstellung.
Figur 3
die Vorrichtung nach zusätzlicher Belastung der Brücke und dem Ausklappen der Verlängerung.

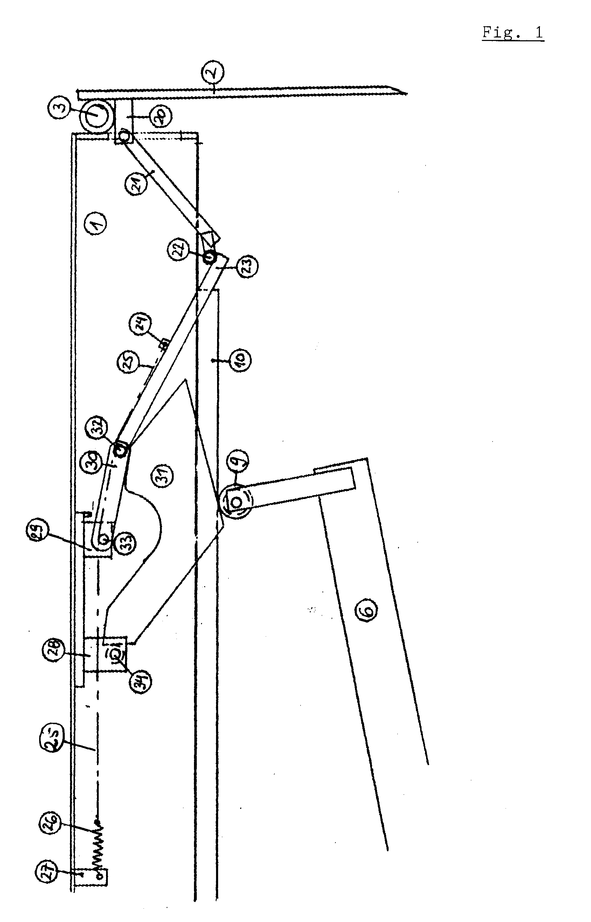

Wie in Figur 1 dargestellt, trägt die (nur mit dem vorderen Teil gezeigten) Brückenplattform (1) der Überfahrbrücke an ihrem vorderen Teil die Verlängerung (2), die um die waagerechte Achse (3) drehbar ist. Die Brückenplattform (1) kann durch einen nicht gezeigten Mechanismus aus der Ruhestellung nach oben bewegt werden, und zwar mittels des Hebelarms (6) und dem daran angebrachten Rollelement (9), das über eine an der Brückenplattform (1) angebrachte Führung (10) läuft, die entweder eben sein oder unter Berücksichtigung der Art der Hubvorrichtung auch eine Kurvenform aufweisen kann. Durch dieses Rollelement (9) wird ein um eine Achse (34) in einem an der Brückenplattform (1) angebrachten Widerlager (28) verschwenkbarer Hebel (31) bewegt, der über eine Stangenanordnung (30,23,21) auf das mit der Verlängerung (2) fest verbundene Widerlager (20) wirkt und die Verlängerung aus der Ruhestellung in die Arbeitsstellung verschwenken kann. Der Arm (21) der Stangenkonstruktion ist im Widerlager (20) um eine horizontale Achse drehbar. Das andere Ende des Arms (21) ist mit dem Arm (23) über die außermittige horizontale Drehachse (22) verbunden. Das andere Ende des Arms (23) ist mit dem Arm (30) über eine horizontale Drehachse (32) verbunden und der Arm (30) selbst wiederum um die horizontale Achse (33) in dem unter der Brückenplattform (1) angebrachten Widerlager (29) drehbar. An dem Arm (23) greift an der dort angebrachten Öse (24) ein Zugelement (25,26) an, das vorzugsweise aus einer Zugfeder (26) und einem Stahlseil (25) besteht. Das andere Ende dieses Zugelements ist im Widerlager (27) befestigt.

Die Gestaltung des Hebels (31) ist in Abhängigkeit von den jeweiligen Gegebenheiten in weiten Grenzen variabel. Die Form der dem Rollelement (9) zugewandten Seiten des Hebels (31) hängt in erster Linie von der Form der Führung (10) ab. Die Anforderungen an die äußere Hebelform an den übrigen Kanten ergeben sich aus der nachfolgenden Funktionsbeschreibung. Ihre Gestaltung macht dem Durchschnittsfachmann keine Schwierigkeiten. Die in der Zeichnung dargestellte Einbuchtung ist nicht erfindungswesentlich und nur dadurch bedingt, daß die Bewegung des Hebels (31) durch die anderen Elemente der Vorrichtung nicht beeinträchtigt werden soll.

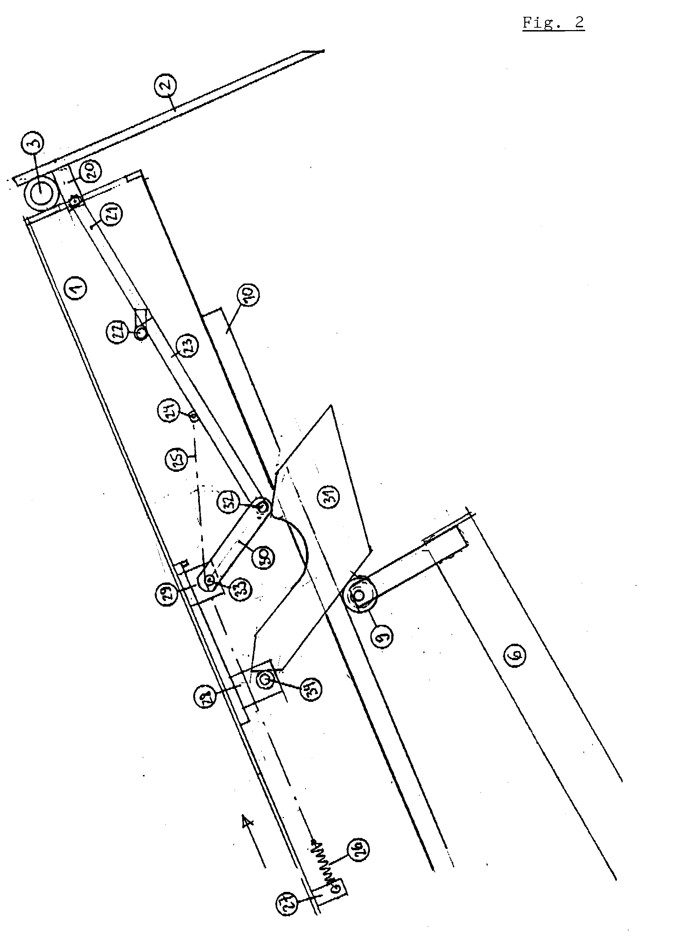

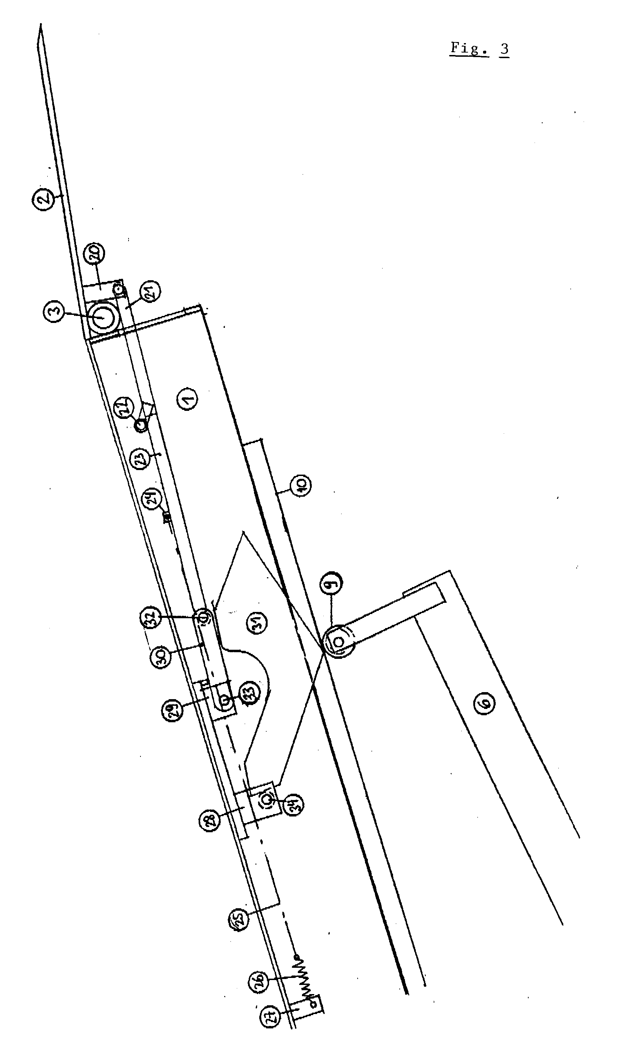

Wird die Überfahrbrücke durch den nicht gezeigten Hubmechanismus aus der in Figur 1 dargestellten Ruhestellung angehoben, so rollt das Rollelement (9) nach hinten und gibt den Hebel (31) frei, der sich nach unten bewegen kann. In Figur 2 ist diese Situation in dem Zeitpunkt gezeigt, in dem die Überfahrbrücke die oberste Betriebsstellung erreicht hat. Der Hebel (31) hat sich dann so weit nach unten gesenkt, daß der Arm (30) seinerseits sich soweit nach unten bewegen kann, daß mittels des Zugelements (25,26) die beiden Arme (21) und (23) miteinander eine Gerade bilden. Wird die Brücke jetzt belastet, etwa dadurch, daß die Bedienungsperson auf die Brücke tritt und nach vorne geht, wie durch den Pfeil auf der linken Seite oberhalb der Brückenplattform angedeutet wird, so senkt sich die Brückenkonstruktion etwas und das Rollelement (9) rollt etwas nach vorne. Dadurch wird der Hebel (31) nach oben verschwenkt. Mit diesem Verschwenken drückt der Hebel (31) gleichzeitig den Arm (30) nach oben, durch den wiederum die insoweit unter Last eine Schubstange bildenden Arme (21) und (23) auf das Widerlager (20) drücken und dadurch die Verlängerung (2) um die Achse (3) nach oben schwenken. Diese Situation ist in Figur 3 dargestellt. In dieser Situation bilden die Arme (21), (23) und (30) exakt eine Gerade zwischen der Drehachse (33) und der horizontalen Achse des Widerlagers (20). Selbst wenn man in dieser Situation den Hebel (31) vom Arm (30) wegbewegt, bleibt die Verlängerung (22) in der ausgeschwenkten Stellung. Wird in diesem Zustand die gesamte Überladebrücke auf die Ladefläche des zu beladenden Kraftfahrzeugs abgesenkt und liegt dann die Verlängerung (2) auf der Ladefläche auf, so hat sich einerseits, was jedoch insoweit nicht entscheidend ist, das Rollelement (9) wieder nach vorne bewegt und ein Absenken des Hebels (31) erlaubt, andererseits wirkt von der Verlängerung (2) ausgehend jedoch keine Kraft mehr auf die Arme (21) und (23). Wegen des Eigengewichts dieser beiden Arme klappen die Arme (21) und (23) um die außermittige Achse (22) nach unten. Fährt man dann den LKW unter der Verlängerung (2) weg oder hebt man die Brücke insgesamt an, so kann die Verlängerung (2) in die in Figur 1 gezeigte Ausgangsstellung zurückklappen. Bringt man dann die Brücke in die horizontale Ruhestellung, ist wieder der in Figur 1 gezeigte Zustand erreicht.

Aus den vorstehenden Erläuterungen ergibt sich, daß das entscheidende Kriterium für die Funktionsfähigkeit der beanspruchten Vorrichtung darin besteht, daß der Hebel (31) den Arm (30) in eine Stellung bewegt, in der dieser Arm mit den Armen (23) und (21) eine Gerade bildet und die Drehlager (33,32) und das Drehlager im Widerlager (20) genau auf einer Geraden liegen.

Obwohl die erfindungsgemäße Vorrichtung vorzugsweise bei von Hand oder durch Federkraft betätigten Überfahrbrücken eingesetzt wird, ist selbstverständlich auch ihre Verwendung bei mechanisch oder hydraulisch betätigten Überfahrbrükken möglich, wenn dort ein Rollelement (9) vorhanden ist oder angeordnet wird.

## Patentansprüche

1. Vorrichtung zum Ausschwenken der um eine waagerechte Achse (3) ausklappbaren Verlängerung (2) einer Überfahrbrücke mit einer an ihrem rampenseitigen Ende um eine Achse verschwenkbaren Brückenplatte (1), bestehend aus einem von unten auf die Brückenplatte (1) wirkenden Hubmechanismus, der über einen Arm (6) und ein damit verbundenes, über eine an der Brückenplatte (1) angebrachte Führung (10) laufendes Rollelement (9) die Brücke anhebt oder ihr Anheben erleichtert, und einem das Ausschwenken der Verlängerung (2) bewirkenden Stangen- und Schwenkarmmechanismus, dadurch gekennzeichnet, dass

1. die Führung (10) parallel zur Brückenplatte angeordnet und fest mit ihr verbunden ist,

2. der Stangenmechanismus aus einem ersten Schubarm (23), einem zweiten Schubarm (21), einem Hebelarm (30) und einem Ausstossarm (20) besteht, wobei

2.1 der Hebelarm (30) einerseits drehbar um ein Auge (33) in dem fest mit der Brückenplatte (1) verbundenen Widerlager (29) befestigt und andererseits drehbar um eine Hebelachse (32) mit dem ersten Schubarm (23) verbunden ist,

2.2 der erste Schubarm (23) mit dem zweiten Schubarm (21) in einen waagerechten Lager (22) derart verbunden ist, dass das Lager (22) auf der der Brückenplatte (1) zugekehrten Seite des ersten und zweiten Schubarms (21,23) befestigt ist, so dass der Drehmittelpunkt des Lagers (22) oberhalb der Systemachse der Schubarme (21, (23) liegt, wenn der erste Schubarm (23) und der zweite Schubarm (21) sich in fluchtender Stellung befinden, wobei die Schubarme (21,23) nicht über die fluchtende Stellung hinaus nach oben zur Brückenplatte (1) hin gedreht werden können,

2.3 der zweite Schubarm (21) mit seinem anderen Ende drehbar um eine waagerechte Achse mit dem fest mit der Verlängerung (2) verbundenen Ausstossarm (20) verbunden ist,

2.4 der Hebelarm (30) in eine fluchtende Stellung mit dem ersten Schubarm (23) und dem zweiten Schubarm (21) durch einen Schwenkarm (31) gebracht wird, der um einen Drehpunkt (34) in der mit der Brückenplatte (1) fest verbundenen Befestigung (28) mittels des über die Führung (10) laufenden Rollelements (9) verschwenkbar ist, und

2.5 die Drehung des Hebelarms (30) über die fluchtende Stellung hinaus nach oben zur Brückenplatte (1) hin durch einen Anschlag am Widerlager (29) begrenzt wird und

3. zwischen einer am ersten Schubarm (23) auf der der Brückenplatte (1) zugekehrten Seite befestigten Öse (24) und einem Befestigungspunkt (27) an der Brückenplatte (1) ein über das Auge (33) umgelenktes Zugelement, bestehend aus einem Zugseil (25) und einer Zugfeder (26), angebracht ist, wobei die Zugfeder (26) in jeder Stellung der Vorrichtung gespannt ist.

## Claims

1. Device for swinging out the extension (2), tiltable about a horizontal axis (3), of a loading bridge having a bridge plate (1) which may be swivelled at its ramp end about an axis, comprising a lifting mechanism which acts from below upon the bridge plate (1) and raises the bridge or facilitates its raising via an arm (6) and a rolling element (9) connected thereto, which runs via a guide (10) mounted on the bridge plate (1), and a rod and swivel arm mechanism which effects the swinging out of the extension (2), characterized in that

1. the guide (10) is disposed parallel to the bridge plate and is firmly connected thereto,
2. the rod mechanism comprises a first sliding arm (23), a second sliding arm (21), a lever arm (30) and a pushing arm (20),
2.1 the lever arm (30) being at one end fastened rotatably about an eye (33) in the abutment (29) firmly connected to the bridge plate (1) and at the other end connected, rotatably about a lever axis (32), to the first sliding arm (23),
2.2 the first sliding arm (23) being connected to the second sliding arm (21) in a horizontal bearing (22) in such a manner that the bearing (22) is fastened on the side of the first and second sliding arm (21, 23) facing the bridge plate (1), with the result that the centre of rotation of the bearing (22) lies above the system axis of the sliding arms (21, 23) when the first sliding arm (23) and the second sliding arm (21) are in an aligned position, with it being impossible for the sliding arms (21, 23) to be rotated beyond the aligned position in an upward direction towards the bridge plate (1),
2.3 the second sliding arm (21) being connected by its other end, rotatably about a horizontal axis, to the pushing arm (20) firmly connected to the extension (2),
2.4 the lever arm (30) being brought into an aligned position with the first sliding arm (23) and the second sliding arm (21) by means of a swivel arm (31), which may be swivelled about a pivot (34) in the fastening (28) firmly connected to the bridge plate (1) by means of the rolling element (9) which runs via the guide (10), and
2.5 rotation of the lever arm (30) beyond the aligned position in an upward direction towards the bridge plate (1) being limited by a stop on the abutment (29), and
3. there being provided, between a lug (24) fastened on the side of the first sliding arm (23) facing the bridge plate (1) and a fastening point (27) on the bridge plate (1), a traction element diverted via the eye (33) and comprising a traction rope (25) and a tension spring (26), the tension spring (26) being under tension in each position of the device.

## Revendications

1. Dispositif pour déployer par pivotement, le prolongement (2) pouvant être déployé par basculement autour d'un axe horizontal (3), d'une passerelle de transbordement comportant une plaque de passerelle (1) susceptible de pivoter autour d'un axe au niveau de son extrémité située du côté du quai de chargement, le dispositif étant constitué d'un mécanisme de levage agissant par le dessous sur la plaque de passerelle (1) et soulevant la passerelle ou facilitant son soulèvement, par l'intermédiaire d'un bras (6) et d'un élément de roulement (9) qui lui est relié et qui se déplace sur un guidage (10) monté sur la plaque de passerelle (1), ainsi que d'un mécanisme à tiges et à bras pivotants produisant le déploiement par pivotement du prolongement (2), caractérisé

1. en ce que le guidage (10) est disposé parallèlement à la plaque de passerelle et y est relié de manière fixe,
2. en ce que le mécanisme à tiges est constitué d'un premier bras de poussée (23), d'un second bras de poussée (21), d'un bras de levier (30) et d'un bras d'extraction (20),
2.1 le bras de levier (30) étant d'une part fixé de manière tournante autour d'un oeil de palier (33) dans le support d'appui (29) relié de manière fixe à la plaque de passerelle (1), et d'autre part relié au premier bras de poussée (23), de manière à pouvoir tourner autour d'un axe de levier (32),
2.2 le premier bras de poussée (23) étant relié au second bras de poussée (21) dans un palier horizontal (22), de manière à ce que le palier (22) soit fixé sur le côté du premier et du second bras de poussée (21, 23), dirigé vers la plaque de passerelle (1), de sorte que le point central de rotation du palier (22) soit situé au-dessus de l'axe du système des bras de poussée (21, 23), lorsque le premier bras de poussée (23) et le second bras de poussée (21) se trouvent en position alignée, les bras de poussée (21, 23) ne pouvant être tournés au-delà de la position alignée, vers le haut en direction de la plaque de passerelle (1),

2.3 le second bras de poussée (21) étant relié, par son autre extrémité, de manière à pouvoir tourner autour d'un axe horizontal, au bras d'extraction (20) lié de manière fixe au prolongement (2),

2.4 le bras de levier (30) étant amené, au moyen de l'élément de roulement (9) se déplaçant sur le guidage (10), dans une position d'alignement avec le premier bras de poussée (23) et le second bras de poussée (21) par l'intermédiaire d'un bras pivotant (31), qui peut pivoter autour d'un point de rotation (34) dans la fixation (28) liée de manière fixe à la plaque de passerelle (1), et

2.5 et la rotation du bras de levier (30) au-delà de la position d'alignement, vers le haut en direction de la plaque de passerelle (1), étant limitée par une butée sur le support d'appui (29), et

3. en ce qu'entre un anneau (24) fixé sur le premier bras de poussée (23), sur le côté dirigé vers la plaque de passerelle (1), et un point de fixation (27) sur la plaque de passerelle (1), est agencé un élément de traction dévié sur l'oeil de palier (33) et constitué d'un câble de traction (25) et d'un ressort de traction (26), le ressort de traction (26) étant tendu dans chaque position du dispositif.

Fig. 1

EP 0 386 273 B1

Fig. 2

Fig. 3

EP 0 386 273 B1